(19)

**Europäisches Patentamt**
**European Patent Office**
**Office européen des brevets**

(11)  **EP 1 983 759 A1**

(12)  **EUROPEAN PATENT APPLICATION**

(43) Date of publication:
**22.10.2008 Bulletin 2008/43**

(51) Int Cl.:
*H04N 7/26* (2006.01)       *H04N 7/36* (2006.01)

(21) Application number: **07007994.2**

(22) Date of filing: **19.04.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS**<br><br>(71) Applicant: **MATSUSHITA ELECTRIC INDUSTRIAL CO., LTD.**<br>**Osaka 571-8501 (JP)** | (72) Inventors:<br> • **Wittmann, Steffen**<br>  **63225 Langen (DE)**<br> • **Wedi, Thomas, Dr.**<br>  **63225 Langen (DE)**<br><br>(74) Representative: **Grünecker, Kinkeldey,**<br>  **Stockmair & Schwanhäusser**<br>  **Anwaltssozietät**<br>  **Leopoldstrasse 4**<br>  **80802 München (DE)** |

(54)  **Estimation of separable adaptive interpolation filters for hybrid video coding**

(57)    The present invention relates to a method for determining filter coefficients of a separable two-dimensional adaptive interpolation filter used for motion compensation with sub-pel resolution, a corresponding method for video data compression with adaptive filtering, and a corresponding apparatus. According to the present invention, the two-dimensional interpolation filter is separated into a one-dimensional horizontal interpolation filter and a one-dimensional vertical interpolation filter. Filter coefficients of the first one-dimensional interpolation filter are determined from blocks of video data having motion vectors that indicate a full-pel displacement in the interpolation direction of the second one-dimensional filter. The first one-dimensional filter may then be applied to the video image so as to obtain one-dimensionally interpolated blocks of video data. Filter coefficients of the second one-dimensional interpolation filter are then determined in a second step from interpolated blocks of video data having motion vectors that indicate a sub-pel displacement in the interpolation direction of the second one-dimensional filter. According to this invention, filter coefficients can be determined in a highly efficient manner by solving systems of linear equations.

Fig. 5

**Description**

The present invention relates to video data compression and in particular to the estimation of adaptive interpolation filters for motion compensation.

BACKGROUND OF THE INVENTION

Video data is being adopted in increasing numbers of applications, ranging from video-telephoning and video-conferencing to DVD and digital television. When video data is being transmitted or recorded, a substantial amount of data has to be sent through conventional transmission channels of limited bandwidth or has to be stored on conventional storage media of limited capacity. In order to transmit and store digital data on conventional channels/media, it is inevitable to compress or reduce the volume of digital data.

For the compression of video data, a plurality of video encoding standards has been developed. Such video standards are, for instance, ITU-T standards denoted with H.26x and ISO/IEC standards denoted with MPEG-x. The most up-to-date and advanced video encoding standard is currently the standard denoted as H.264/MPEG-4 AVC.

The encoding approach underlying most of these standards consists of the following main stages:

(a) Dividing each individual video frame into two-dimensional blocks of pixels in order to subject each video frame to data compression at a block level.

(b) Decorrelating spatiotemporal video information by applying a temporal prediction scheme to each block and by transforming the residual prediction error from the spatial domain into the frequency domain.

(c) Reducing the overall amount of data by quantizing the resulting transform coefficients.

(d) Compressing the remaining data by entropy encoding the quantized transform coefficients.

The temporal prediction scheme employed by most state-of-the-art video coding standards is motion compensation. In this prediction scheme, one or more motion vectors are determined for each block of video data in order to describe image displacements caused be object and/or camera movements. Based on the motion vectors determined, the image content of one block may be predicted at least to a certain extend from the image content of previously coded blocks. The remaining discrepancy between the predicted and the actual image content is called the prediction error, which is then encoded together with the motion vectors rather than the actual image content. In this manner, a substantial reduction in the amount of information to be coded can be achieved for most "natural" video sequences.

Obviously, compression efficiency depends critically on the accuracy of motion estimation. Modern video coding standards such as H.264/AVC thus allow for motion vectors with sub-pel resolution, i.e., motion vectors that are not restricted to integer values relative to pixel positions but that may also point to a position "between" two pixels. Usually, motion vectors are determined at half-pel or quarter-pel resolution, i.e. with a resolution twice or four times as large as the original video resolution.

Since motion vectors with sub-pel resolution may refer to positions in the reference image, which are located between the sampled positions, interpolation is needed in order to compute the predicted image. Generally, a predetermined interpolation filter is employed for computing the required sub-pel pixel values.

In order to further improve the prediction accuracy, and therewith compression efficiency, predetermined interpolation filters may be replaced by adaptive interpolation filters that are specifically adapted to statistical properties of the current video image. In this manner, aliasing artifacts and camera noise may be taken into account that are peculiar to the video data that is to be compressed.

Generally, two-dimensional filters for image processing may be classified as being either separable or non-separable. Separable two-dimensional filters may be decomposed into two one-dimensional filters. Consecutive application of the two one-dimensional filters is then equivalent to applying the original two-dimensional filter. For non-separable filters no such one-dimensional filters can be found.

Separable filters are advantageous in the sense that their application to an image is computationally less expensive due to the reduced number of coefficients. A 6x6-tap two-dimensional filter, for instance has a total of 36 coefficients, whereas, in case of separability, the two one-dimensional filters have a total of only 6+6 coefficients.

On the other hand, each coefficient of the two-dimensional separable filter is equivalent to the product of two coefficients of the two one-dimensional filters. Therefore, filter coefficients of the two one-dimensional filters are computationally more complex to determine.

## SUMMARY OF THE INVENTION

The aim of the present invention is to provide an efficient method for determining filter coefficients of a two-dimensional separable adaptive interpolation filter for motion compensation of a sequence of video images. It is a further aim of the present invention to provide a method for video data compression and a corresponding apparatus that employ a two-dimensional separable interpolation filter for adaptive filtering.

This is achieved by the features as set forth in the independent claims.

Preferred embodiments are the subject matter of dependent claims.

It is the particular approach of the present invention to employ an adaptive two-dimensional interpolation filter that is separable into a one-dimensional horizontal interpolation filter and a one-dimensional vertical interpolation filter and to determine filter coefficients of the first one-dimensional interpolation filter from blocks of video data having motion vectors that indicate a full-pel displacement in the interpolation direction of the second one-dimensional filter. The first one-dimensional filter may then be applied to the video image so as to obtain one-dimensionally interpolated blocks of video data. Filter coefficients of the second one-dimensional interpolation filter are then determined in a second step from interpolated blocks of video data having motion vectors that indicate a sub-pel displacement in the interpolation direction of the second one-dimensional filter.

According to a first aspect of the present invention, a method for determining filter coefficients of a two-dimensional adaptive interpolation filter for motion compensation of a sequence of video images is provided. The two-dimensional adaptive interpolation filter is separable into a first and a second one-dimensional filter, so that the first and the second one-dimensional filter perform interpolation along a first and a second direction, respectively. The first direction is either one of the horizontal and the vertical direction, whereas the second direction is either one of the horizontal and the vertical direction other than the first direction. The method comprises the steps of dividing the video images into a plurality of blocks; determining displacement vectors indicating image displacement between a current block and a previous block, said displacement vectors having a fractional-pel resolution; determining filter coefficients of the first one-dimensional filter based on blocks having first displacement vectors that indicate a sub-pel displacement in the first direction and a full-pel displacement in the second direction; and determining filter coefficients of the second one-dimensional filter based on blocks having second displacement vectors other than the first displacement vectors.

Preferably, the filter coefficients of the second one-dimensional filter are determined based on blocks having displacement vectors that indicate a full-pel displacement in the first direction and a sub-pel displacement in the second direction. Alternatively, the first one-dimensional filter is applied so as to obtain one-dimensionally interpolated blocks of video data, so that the filter coefficients of the second one-dimensional filter may be determined based on one-dimensionally interpolated blocks having displacement vectors that indicate a sub-pel displacement in the first direction and a sub-pel displacement in the second direction.

Preferably, filter coefficients are determined by computing a measure indicating accuracy of the motion compensation and by varying values of the filter coefficients so as to optimize the computed measure. In this manner, the two-dimensional interpolation filter may be adapted to the image statistics so as to optimize motion compensation and therewith coding efficiency.

Preferably, filter coefficients are determined by solving a system of linear equations so as to determine values of the filter coefficients that optimize accuracy of the motion compensation. In this manner, filter coefficients may be determined in a highly efficient manner without employing a computationally expensive numerical optimization algorithm.

According to a second aspect of the present invention, a method for video data compression is provided. The method comprises the steps of determining a displacement vector indicating image displacement between a current block of video data and a previous block of video data, said displacement vector having a fractional-pel resolution; obtaining filter coefficients of a two-dimensional adaptive interpolation filter by performing all steps of a method according to the first aspect of the present invention; obtaining pixel values at sub-pel positions indicated by the displacement vector by applying the two-dimensional adaptive interpolation filter to the previous block of video data; obtaining a prediction error signal by applying motion compensation to the current block of video data based on the obtained pixel values and the displacement vector; and generating compressed video data by encoding the prediction error signal and the filter coefficients.

Preferably, the step of obtaining pixel values further comprises a first interpolation step, wherein the first one-dimensional filter is applied to the previous block of video data so as to obtain pixel values that correspond to a one-dimensionally interpolated block of video data; and a second interpolation step, wherein the second one-dimensional filter is applied to the one-dimensionally interpolated block of video data. In this manner, the two-dimensional adaptive interpolation filter may be applied in a computationally efficient manner.

Preferably, the first interpolation step does not affect a pixel value at a full-pel position. Further, the second interpolation step preferably does not affect a pixel value at a full-pel position nor a pixel value obtained by the first interpolation step.

Preferably, pixel values at a certain sub-pel position are determined by applying a two-dimensional adaptive interpolation filter that is specific for the certain sub-pel position. The two-dimensional adaptive interpolation filter is a discrete filter that operates on pixels of the original image only, i.e., pixels at full-pel positions. If this filter is supposed to be generate more than only one interpolated sub-pel value for each full-pel pixel, such as in the case of quarter-pel resolution, the sub-pel position, where an interpolated pixel value needs to be obtained, has to be taken into account.

Preferably, a two-dimensional adaptive interpolation filter that is specific for a full-pel position in the first direction is determined by filter coefficients of the second one-dimensional filter only. Similarly, a two-dimensional adaptive interpolation filter that is specific for a full-pel position in the second direction is determined by filter coefficients of the first one-dimensional filter only. For these two-dimensional adaptive interpolation filter interpolation has to be performed in one direction only, since full-pel pixels in the respective direction are already available. For a two-dimensional adaptive interpolation filter, however, that is specific for a sub-pel position in the first and the second direction comprises filter coefficients of the first and the second one-dimensional filter. In this case, no full-pel pixels are available so that interpolation has to be performed in both directions.

Preferably, at least some of the filter coefficients are obtained by exploiting symmetry properties between two different two-dimensional adaptive interpolation filters that are specific for two different sub-pel positions, respectively. Further, at least some of the filter coefficients are obtained by exploiting symmetry properties of the two-dimensional adaptive interpolation filter. In particular, the two-dimensional adaptive interpolation filter may be symmetric with respect to at least either one of horizontal and vertical mirroring. In this manner, the overhead for determining and transmitting filter coefficients may be reduced substantially.

Preferably, the step of obtaining filter coefficients is repeated for either one of every slice of video data, every video image, and every sequence of video images. In this manner, the two-dimensional adaptive interpolation filter may be updated as needed in order to ensure that it is always optimally adapted to the current image statistics.

According to a third aspect of the present invention, an apparatus for encoding video data is provided. This apparatus is adapted to carry out all steps of a method according to any of the first and the second aspect of the present invention.

According to a fourth aspect of the present invention, a computer program product is provided. The computer program product comprises a computer readable medium having computer readable program code embodied thereon, the program code being adapted to carry out all steps of a method according to any of the first and the second aspect of the present invention.

The above and other objects and features of the present invention will become more apparent from the following description and preferred embodiments given in conjunction with the accompanying drawings, in which:

Fig. 1    is a block diagram of a conventional video encoder;

Fig. 2    is a block diagram of a conventional video decoder;

Fig. 3    is a block diagram of a video encoder applying motion compensation with adaptive filtering;

Fig. 4    is a block diagram of a video decoder applying motion compensation with adaptive filtering;

Fig. 5    is a schematic drawing of a block of video data;

Fig. 6    is a schematic drawing illustrating horizontal interpolation of the original block of video data;

Fig. 7    is a schematic drawing illustrating horizontal and vertical interpolation of the original block of video data;

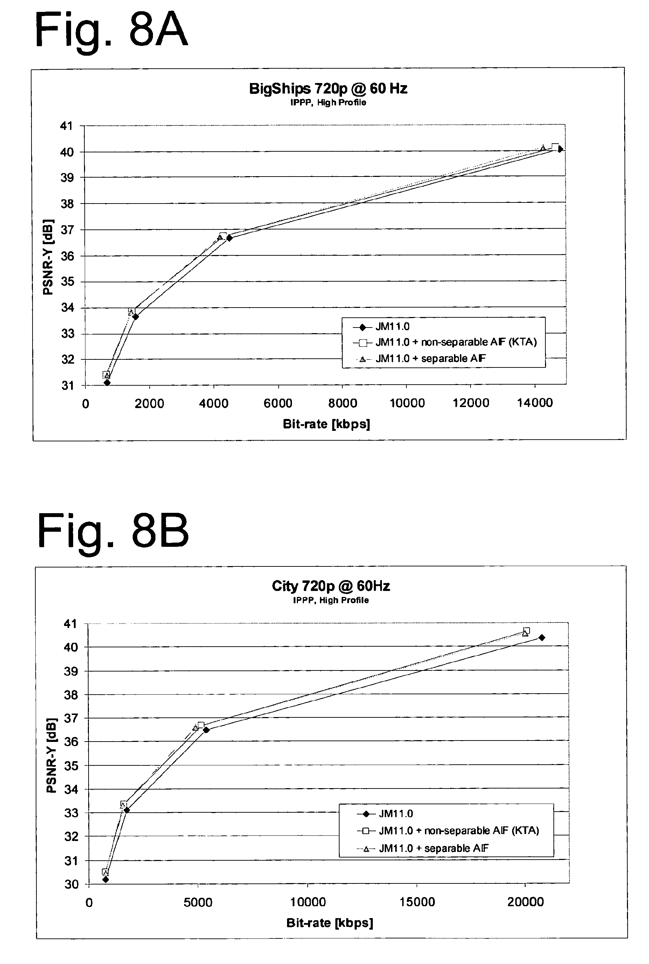

Fig. 8    is a chart comparing coding efficiencies achieved by a conventional non-separable adaptive interpolation filter and the separable adaptive interpolation filter according to the present invention; and

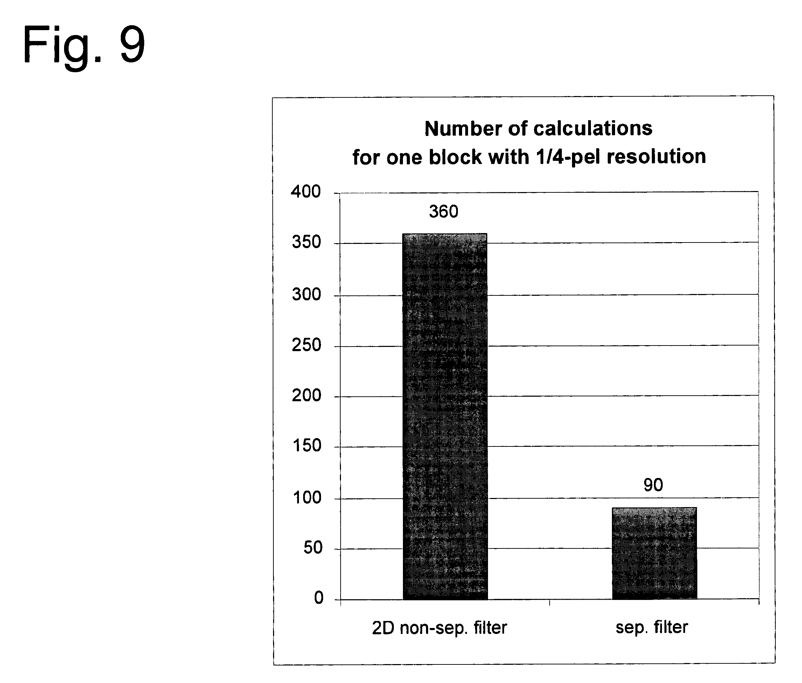

Fig.9    is a chart comparing the computational complexity of applying the conventional non-separable adaptive interpolation filter and the separable adaptive interpolation filters according to the present invention.

DETAILED DESCRIPTION

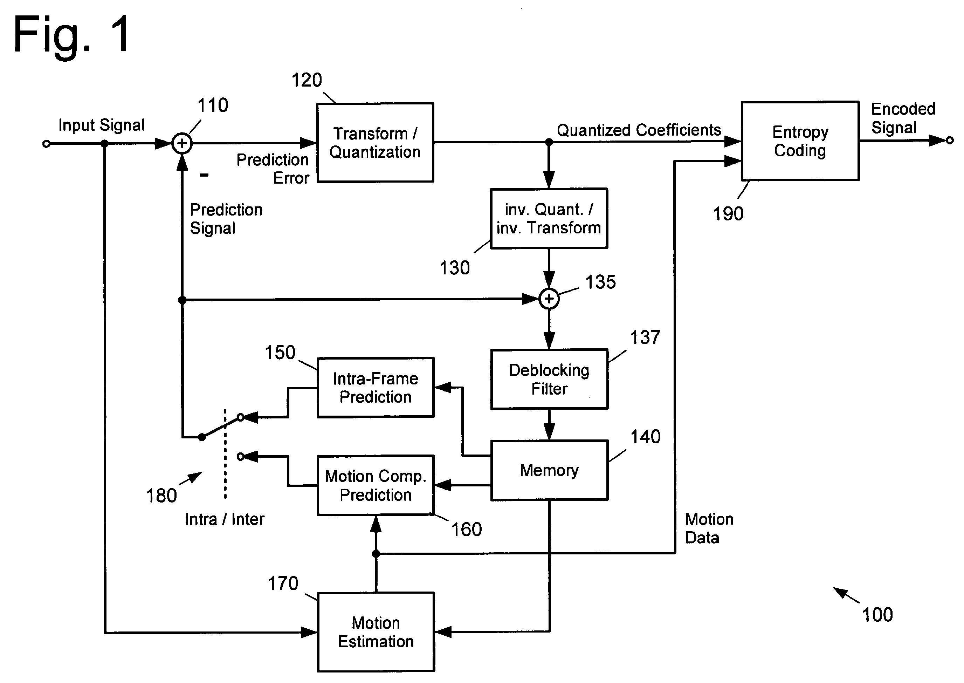

Referring to Fig. 1, an example of a conventional video encoder is illustrated. The video encoder, generally denoted by reference numeral 100, comprises a subtractor 110 for determining differences between a current block of a video image (input signal) and a prediction signal of the current block which is based on previously encoded blocks stored in memory 140. A transformation and quantization unit 120 transforms the resulting prediction error from the spatial domain to the frequency domain and quantizes the obtained transform coefficients. An entropy coding unit 190 entropy encodes the quantized transform coefficients.

In accordance with the H.264 / AVC standard, the input image is divided into macro blocks. The encoder 100 employs a Differential Pulse Code Modulation (DPCM) approach which only transmits differences between blocks of an input video sequence and their predictions based on previously encoded blocks ("the locally decoded image"). These differences are determined in subtractor 110, which receives the blocks to be encoded in order to subtract the prediction signal therefrom.

The locally decoded image is provided by a decoding unit incorporated into video encoder 100. The decoding unit performs the encoding steps in reverse manner. An inverse quantization and inverse transformation unit 130 dequantizes the quantized coefficients and applies an inverse transformation to the dequantized coefficients. In adder 135, the decoded differences are added to the prediction signal to form the locally decoded image. Further, a deblocking filter 137 reduces blocking artifacts in the decoded image.

The type of prediction that is employed by video encoder 100 depends on whether the macro blocks are encoded in "Intra" or "Inter" mode. In "Intra" mode the video encoding standard H.264/AVC uses a prediction scheme based on already encoded macro blocks of the same image in order to predict subsequent macro blocks. In "Inter" mode, motion compensated prediction between corresponding blocks of several consecutive frames is employed.

Only Intra-encoded images (I-type images) can be decoded without reference to any previously decoded image. The I-type images provide error resilience for the encoded video sequence. Further, entry points into bit streams of encoded data are provided by the I-type images in order to enable a random access, i.e. to access I-type images within the sequence of encoded video images. A switch between Intra-mode, i.e. a processing by Intra-frame prediction unit 150, and Inter-mode, i.e. a processing by motion compensated prediction unit 160, is controlled by Intra/Inter switch 180.

In "Inter" mode, a macro block is predicted from corresponding blocks of previous frames by employing motion compensation. The estimation is accomplished by a motion estimator unit 170, receiving the current input signal and the locally decoded image. Motion estimation yields two-dimensional motion vectors, representing a pixel displacement between the current block and the corresponding block in previous frames. Based on the estimated motion, a motion compensated prediction unit 160 provides a prediction signal.

In order to optimize prediction accuracy, motion vectors may be determined at sub-pel resolution, e.g. half-pel or quarter-pel resolution. A motion vector with sub-pel resolution may point to a position within a previous frame where no pixel value is available, i.e. a sub-pel position. Hence, spatial interpolation of pixel values is needed in order to perform motion compensation. According to the H.264/AVC standard, a 6-tap Wiener interpolation filter with fixed filter coefficients and a bilinear filter is applied in order to obtain pixel values for sub-pel positions. The interpolation process is done as follows:

1. The half-pel positions are calculated using the 6-tap filter horizontally and vertically.

2. The quarter-pel positions are calculated using bilinear filtering applying the already computed half-pel values as well as the existing full-pel values.

As the filter coefficients are fixed and therefore known by the decoder, no overhead data is necessary to transmit the filter to the decoder.

For both the "Intra" and the "inter" encoding mode, the differences between the current and the predicted signal are transformed into transform coefficients by transformation / quantization unit 120. Generally, an orthogonal transformation such as a two-dimensional Discrete Cosine transformation (DCT) or an integer version thereof is employed.

The transform coefficients are quantized in order to reduce the amount of data that has to be encoded. The step of quantization is controlled by quantization tables that specify the precision and therewith the number of bits that are used to encode each frequency coefficient. Lower frequency components are usually more important for image quality than fine details so that more bits are spent for coding the low frequency components than for the higher ones.

After quantization, the two-dimensional array of transform coefficients has to be converted into a one-dimensional string to pass it to the entropy encoder. This conversion is done by scanning the array in a predetermined sequence. The thus obtained one-dimensional sequence of quantized transform coefficients is compressed to a series of number pairs called run levels. Finally, the run-level sequence is coded with binary code words of variable length (Variable Length Code, VLC). The code is optimized to assign shorter code words to most frequent run-level pairs occurring in typical video images. The resulting bitstream is multiplexed with the motion information and stored on a recording medium or transmitted to the decoder side.

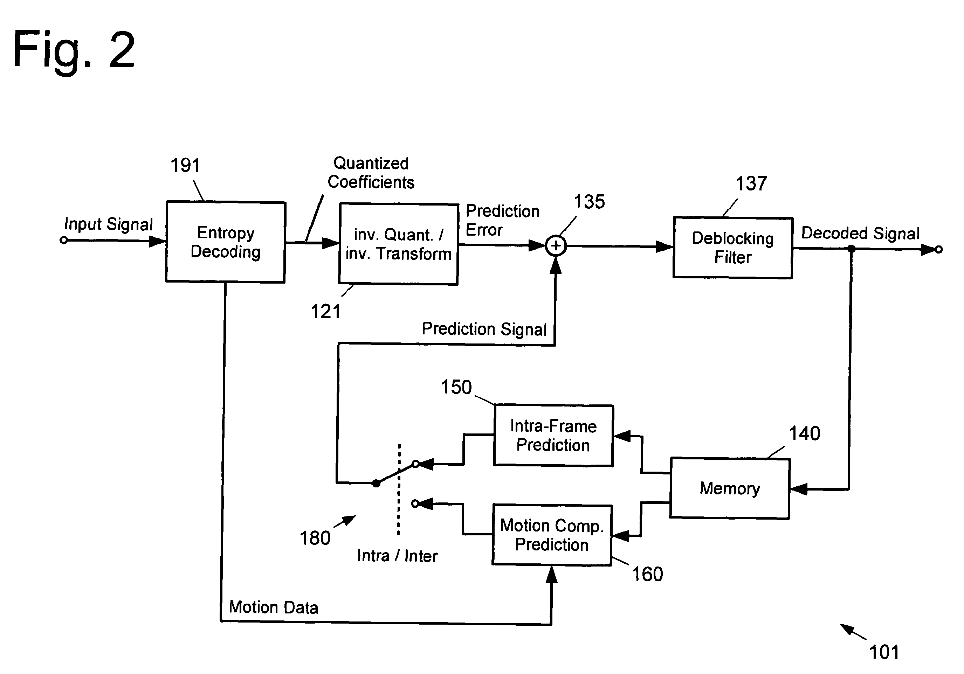

For reconstructing the encoded images at the decoder side, the encoding process is applied in reverse manner. A schematic block diagram, illustrating the configuration of the corresponding decoder, is shown in Fig. 2.

In decoder 101 of Fig. 2, first the entropy encoding of transform coefficients and motion data is reversed in an entropy decoding unit 191. This step also involves an inverse scanning in order to convert the sequence of decoded transform coefficients into a two-dimensional block of data as it is required for the inverse transformation. The decoded block of transform coefficients is then submitted to an inverse quantizer and inverse transformer 121 and the decoded motion data is sent to a motion compensated prediction unit 160. Depending on the actual value of the motion vector, interpolation of pixel values may be needed in order to perform motion compensation. The result of the inverse transformation contains prediction differences and is added by adder 135 to the prediction signal stemming from the motion compensated prediction unit 160 in Inter-mode or stemming from an Intra-frame prediction unit 150 in Intra-mode. The reconstructed image may be passed through a deblocking filter 137 and the decoded signal is stored in memory 140 to be applied to prediction units 150, 160.

As explained above, coding efficiency critically depends on prediction accuracy, which in turn depends on the accuracy of motion estimation and compensation. Motion compensation may be improved by replacing the fixed interpolation filters employed by the motion compensated prediction unit 160 by filters that adapt to the statistical properties of the video images.

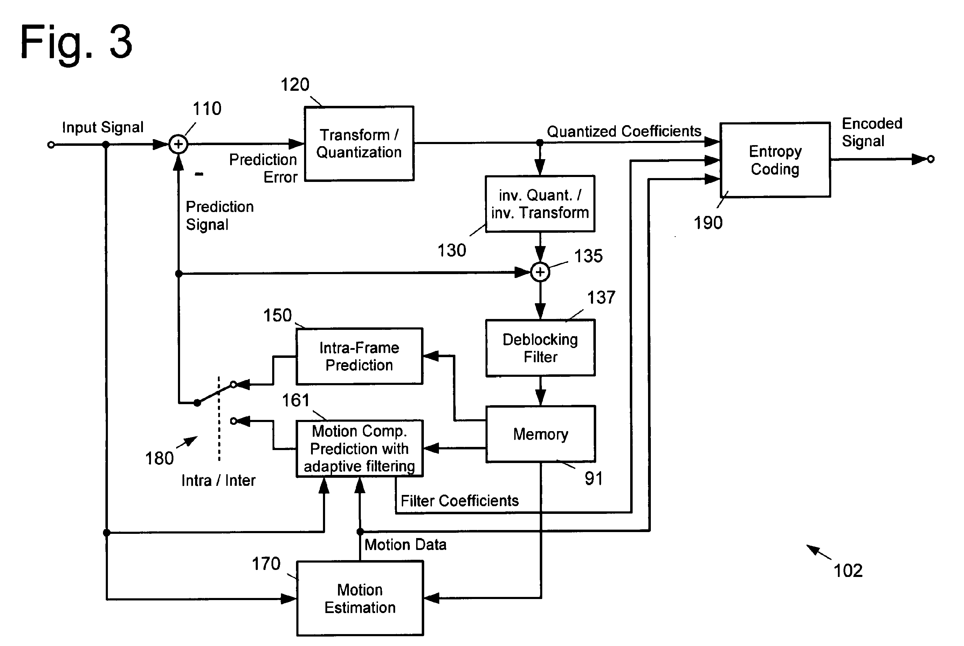

Figure 3 is a block diagram of a video encoder employing motion compensation with adaptive filtering. The block diagram of Fig. 3 is similar to that of Fig. 1, wherein like reference numerals denote like elements, a detailed description of which will be omitted.

In contrast to the block diagram of the conventional video encoder shown in Fig. 1, the motion compensated prediction unit 161 also determines the adaptive interpolation filter required for compensation. To this end, motion compensated prediction unit 161 also receives a copy of the input signal. Moreover, coefficients of the thus determined adaptive interpolation filter are transmitted to the entropy coder 190 in order to be inserted into the output bitstream.

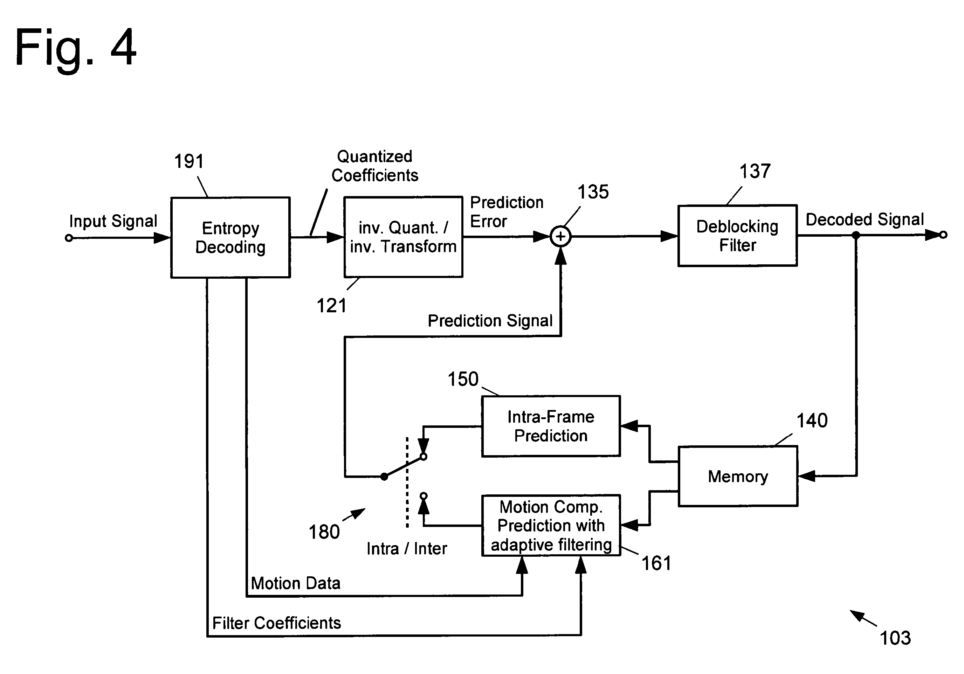

Figure 4 is a block diagram of a video decoder employing motion compensation with adaptive filtering. The block diagram of Fig. 4 is similar to that of Fig. 2, wherein like reference numerals denote like elements, a detailed description of which will be omitted. In analogy to the encoder of Fig. 3, the motion compensated prediction unit 161 applies the adaptive interpolation filter upon compensating the current image. To this end, the motion compensated prediction unit 161 receives filter coefficients decoded from the input bitstream by means of the entropy decoder 191.

In the following, the inventive method for determining filter coefficients of a separable two-dimensional interpolation filter is described.

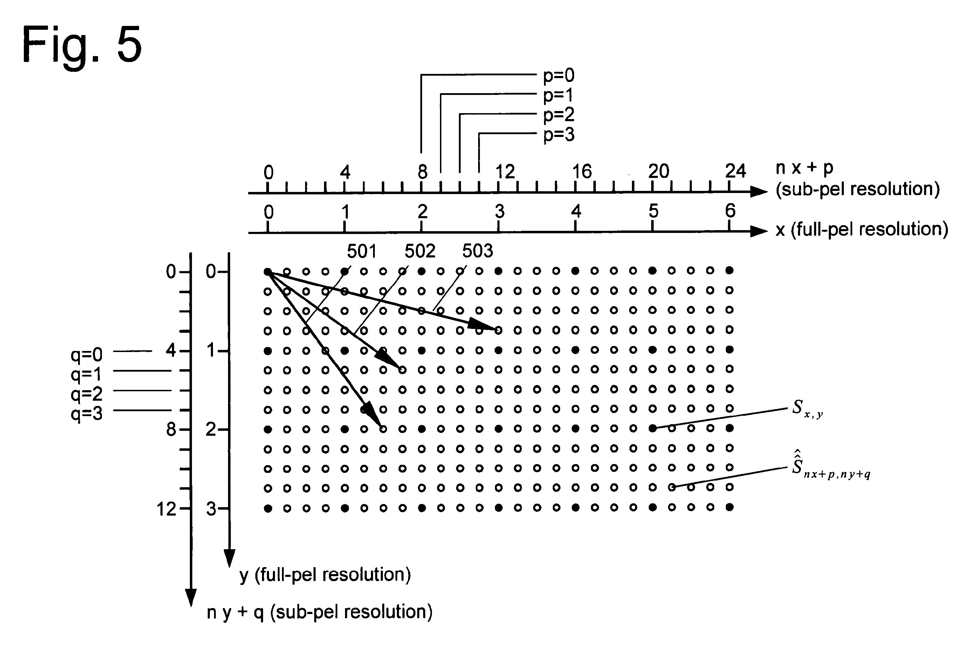

Fig. 5 is a schematic drawing of a block of video data. Filled circles denote full-pel positions, i.e. sampling points of the original image, whereas open circles indicate sub-pel positions, at which pixel values have to be interpolated. Although the following figures illustrate quarter-pel resolution, the present invention may be applied to any particular fractional-pel resolution, including different sub-pel resolutions in vertical and horizontal direction.

In the following, $n$ will denote sub-pel resolution, i.e., $n=2$ for half-pel and $n=4$ for quarter-pel resolution, etc. Moreover, the original image (or block of video data) will be denoted by $S_{x,y}$, which is the pixel value at full-pel position $(x,y)$. The corresponding horizontally and vertically interpolated image will be denoted by $\hat{\hat{S}}_{nx+p,ny+q}$. Here, subpel position is denoted by $p=0,...,n-1$ and $q=0,...,n-1$ ; cf. Fig. 5. Hence, the pixel at full-pel position $(nx, ny)$ in the interpolated image corresponds to pixel $(x, y)$ in the original image.

A displacement vector (501, 502, 503) will be denoted by $\vec{v}=(v_x, v_y)$. The components $v_x$ and $v_y$ refer to fractional-pel positions. A displacement vector (503) with $v_x \bmod n=0$ is said to point to a full-pel position in x-direction (or to indicate a full-pel translation in x-direction). A displacement vector (501, 502) with $v_x \bmod n=1,...,(n-1)$ is said to point to a sub-pel position in x-direction (or to indicate a sub-pel translation in x-direction). A similar terminology will be used for the y-direction.

It is the particular approach of the present invention to employ a two-dimensional interpolation filter that may be separated into a one-dimensional horizontal interpolation filter g and a one-dimensional vertical interpolation filter $h$. More specifically, the following ansatz is employed for the horizontally interpolated image

$$\hat{S}_{nx+p,y} = \sum_i g_i^{(p)} S_{x-i,y} . \qquad (1)$$

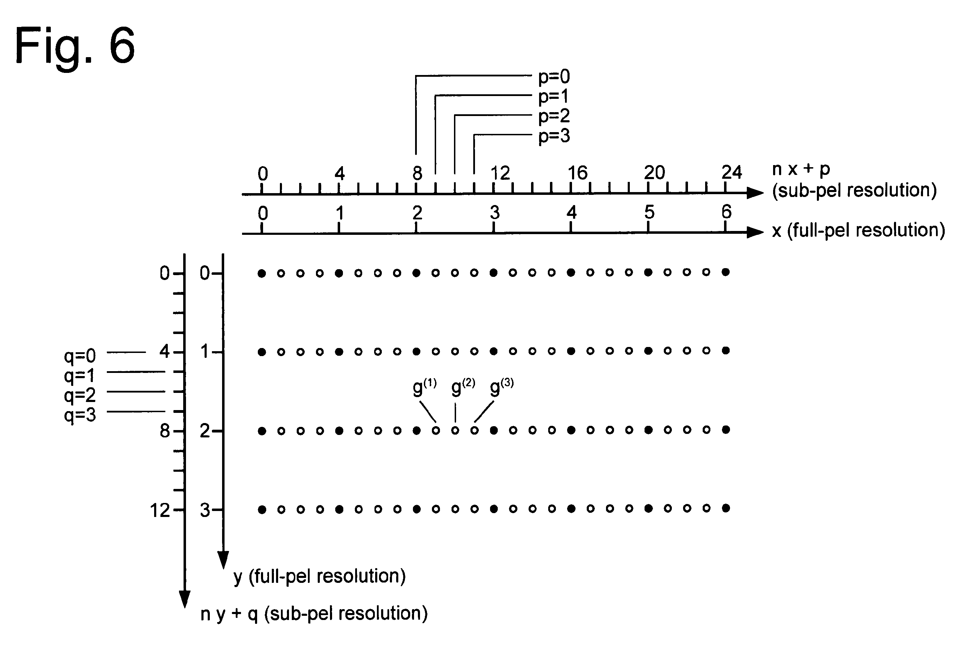

Here, $g_i^{(p)}$ are discrete filter coefficients of the horizontal interpolation filter with, for instance, $i=-2,-1, 0, 1, 2, 3$ for a 6-tap filter. The sum is to be taken over all coefficients. The horizontal filter coefficients will also depend on the particular sub-pel position $p=0,..., n-1$. Hence, a specific horizontal interpolation filter $g^{(p)}$ is defined for each sub-pel position; cf. Fig. 6.

Having thus defined the horizontal interpolation filters $g^{(p)}$, vertical interpolation filters are defined via

$$\hat{\hat{S}}_{nx+p,\,ny+q} \;=\; \sum_{j} h_{j}^{(p,q)}\,\hat{S}_{nx+p,\,y-j} \;=\; \sum_{i,\,j} g_{i}^{(p)}\,h_{j}^{(p,q)}\,S_{x-i,\,y-j}\,. \tag{2}$$

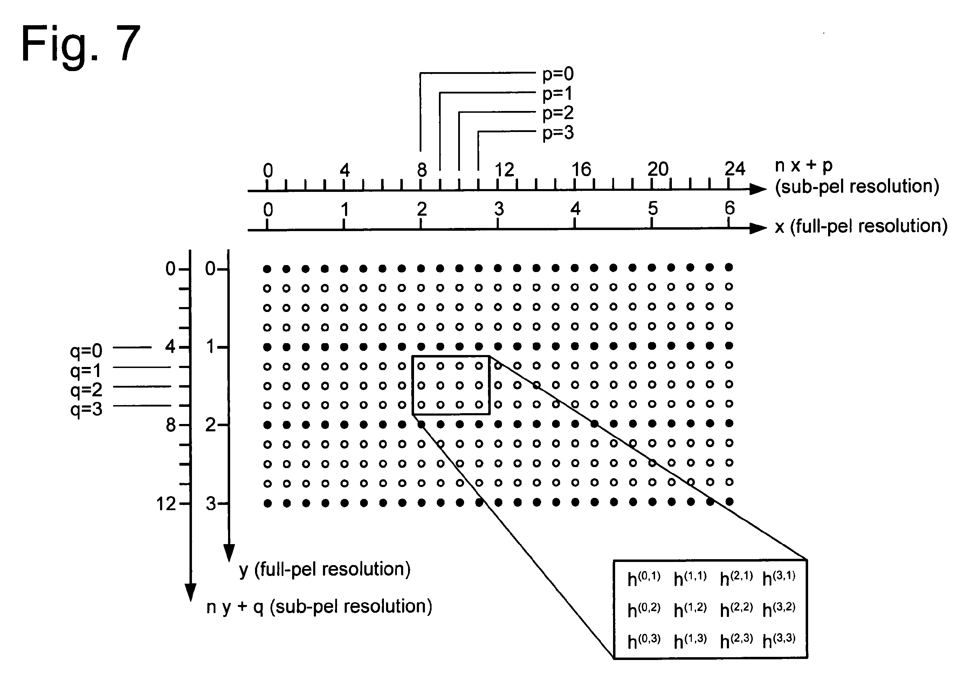

Here, $h_{j}^{(p,q)}$ are discrete filter coefficients for the vertical interpolation filter that operates on the horizontally interpolated image $\hat{S}_{nx+p,y}$ with, for instance, $j$=-2,-1, 0,1,2,3 for a 6-tap filter. The vertical filter coefficients do also depend on the particular sub-pel position $(p,q)$. Hence, a specific vertical interpolation filter $h^{(p,q)}$ is defined for each sub-pel position $(p,\,q)$; cf. Fig. 7.

According to the present invention, it is requested that the interpolation filter should yield the original values at fullpel positions. Hence

$$g_{i}^{(0)} \;=\; \delta_{i,0} \;\wedge\; h_{j}^{(0,0)} \;=\; \delta_{j,0}\,. \tag{3}$$

Here, $\delta_{k,l}$ is the Kronecker-Delta with $\delta_{k,l}$=1 if $k$=$l$ and $\delta_{k,l}$=0 if $k{\neq}l$. Further, it is also requested that vertical interpolation does not alter the result of the horizontal interpolation, i.e.

$$h_{j}^{(p,0)} \;=\; \delta_{j,0}\,. \tag{4}$$

Consequently, there are $(n$-1) non-trivial horizontal filters $g^{(1)}$, ..., $g^{(n-1)}$, and $n(n$-1) non-trivial vertical filters $h^{(0,1)},...,h^{(0,n-1)},h^{(1,1)},...,h^{(n-1,n-1)}$

Horizontal filter coefficients $g_{i}^{(p)}$ are now be determined as follows. Let $P_{x,y}$ denote the previously decoded reference image and $\vec{v}$=$(v_{x},v_{y})$ a displacement vector at sub-pel resolution that points to a "full-pel row", i.e., $v_{y}$ mod $n$=0. In other words, the displacement vector denotes a full-pel displacement along the vertical direction. Hence, no interpolation in vertical direction is needed in order to compensate such a displacement. The remaining prediction error for this displacement may thus be expressed in terms of the horizontal filter coefficients alone, viz.

$$\left(e_{p}\right)^{2} \;=\; \sum_{x,\,y}\left(S_{x,\,y}-\sum_{i} g_{i}^{(p)} P_{\tilde{x}-i,\,\tilde{y}}\right)^{2}, \tag{5}$$

with $\tilde{x}$=$x$+$[v_{x}/n]$, $p$=$v_{x}$, mod $n$ and $\tilde{y}$=$y$+$[v_{y}/n]$=$y$+$v_{y}/n$, wherein [...] denotes the floor operator that yields the largest integer smaller than the operator's argument (round-down operator). The sum over x and y is to be taken over that region of the original image for which the displacement vector is valid. This region may correspond to the macro block, for which the displacement vector has been determined. The region may also consist of a (non-connected) union of some or all macro blocks (of one or more video images) with displacement vectors that point to the same sub-pel position, i.e., displacement vectors with $v_{x}$ mod $n$=$p$ and $v_{y}$ mod $n$=0.

According to the present invention, the horizontal filter coefficients $g_{i}^{(p)}$ are determined so as to minimize the prediction error of Eq. (5). The optimization may be performed by any numerical optimization algorithm known in the art, such as gradient descent, simulated annealing, etc. However, in the present case, the optimum filter coefficients may be determined advantageously by solving a system of linear equations that results from computing the partial derivatives of Eq. (5) with respect to the filter coefficients $g_{i}^{(p)}$, viz.

$$0 \;=\; \frac{\partial}{\partial g_{k}^{(p)}} \sum_{x,\,y}\left(S_{x,\,y}-\sum_{i} g_{i}^{(p)} P_{\tilde{x}-i,\,\tilde{y}}\right)^{2} \;=\; -2\sum_{x,\,y} P_{\tilde{x}-k,\,\tilde{y}}\left(S_{x,\,y}-\sum_{i} g_{i}^{(p)} P_{\tilde{x}-i,\,\tilde{y}}\right) \tag{6}$$

With thus determined horizontal filter coefficients $g_i^{(p)}$, the previously decoded image may be interpolated in horizontal direction:

$$\hat{P}_{nx+p,y} \;=\; \sum_i g_i^{(p)} P_{x-i,y}\,. \tag{7}$$

According to the present invention, the vertical filter coefficients $h_j^{(p,q)}$ are then determined in a second step by optimizing the prediction error that also takes vertical sub-pel displacements into account. Hence, let $\vec{v}=(v_x, v_y)$ denote a displacement vector at sub-pel resolution that points to a "sub-pel row", i.e., $v_y \bmod n \neq 0$ and compute the corresponding prediction error $(e_{p,q})^2$,

$$\left(e_{p,q}\right)^2 \;=\; \sum_{x,y}\left(S_{x,y}-\sum_j h_j^{(p,q)}\,\hat{P}_{nx+v_x,\tilde{y}-j}\right)^2, \tag{8}$$

with $\tilde{y}=y+[v_y/n]$, $p=v_x \bmod n$ , and $q=v_y \bmod n$. The sum over x and y is to be taken over that region of the original image for which the displacement vector is valid. This region may correspond to the macro block, for which the displacement vector has been determined. The region may also consist of a (non-connected) union of some or all macro blocks with displacement vectors that point to the same sub-pel position, i.e., displacement vectors with $v_x \bmod n=p$ and $v_y \bmod n=q$.

It is to be noted that this method allows the determination of only those vertical interpolation filters that correspond to the vertical sub-pel position to which the displacement vector is pointing, i.e, those filters $h_j^{(p,q)}$ with $p=v_x \bmod n$ and $q=v_y \bmod n$. However, this does not imply any practical restriction since only those interpolation filters are needed for image compensation anyway. Pixel values at sub-pel positions other than those of the displacement vector do not have to be computed. However, displacement vectors with $v_x \bmod n= p$ and $v_y \bmod n=0$ are needed in any case in order to determine the the corresponding horizontal interpolation filter $g_i^{(p)}$ in the first place.

Again, the optimization may be performed by any numerical optimization algorithm known in the art, such as gradient descent, simulated annealing, etc. However, in the present case, the optimum filter coefficients may be determined advantageously by solving a system of linear equations that results from computing the partial derivatives of Eq. (8) with respect to the filter coefficients $h_j^{(p,q)}$ , viz.

$$\begin{aligned}
0 \;&=\; \frac{\partial}{\partial h_k^{(p,q)}} \sum_{x,y}\left(S_{x,y}-\sum_j h_j^{(p,q)}\,\hat{P}_{nx+v_x,\tilde{y}-j}\right)^2 \\
&=\; -2\sum_{x,y}\hat{P}_{nx+v_x,\tilde{y}-k}\left(S_{x,y}-\sum_j h_j^{(p,q)}\,\hat{P}_{nx+v_x,\tilde{y}-j}\right)
\end{aligned} \tag{9}$$

Hence, the computational complexity of the method for estimating the filter coefficients according to the present invention is equivalent to a conventional matrix inversion.

In the above description, $g_i^{(p)}$ and $h_j^{(p,q)}$ denoted filter coefficients of the horizontal and the vertical interpolation filter, respectively, the horizontal interpolation filter being determined prior to the vertical interpolation filter. However, the role of $g_i^{(p)}$ and $h_j^{(p,q)}$ may also be exchanged so that the vertical filter is determined before the horizontal filter.

Further, the vertical interpolation filter $h_j^{(p,q)}$ is allowed to depend on the horizontal sub-pel position $p$. However, similar advantages may also be achieved if the vertical interpolation filter $h_j^{(p,q)}$ is replaced by $h_j^{(q)}$, i.e., by a vertical interpolation filter that is translational invariant in horizontal direction. In this case, the number of non-trivial vertical filters can be reduced to ($n$-1), thus further reducing the signaling overhead.

Moreover, translational invariant coefficients $h_j^{(q)}$ can be determined analogously to $g_i^{(p)}$, i.e. without first performing a horizontal interpolation. The coefficients $h_j^{(q)}$ no longer depend on $p$, so that $p=0$ may be substituted in Eq.(9), yielding

$$\left(e_{0,q}\right)^2 = \sum_{x,y}\left(S_{x,y}-\sum_j h_j^{(q)}\hat{P}_{nx+v_x,\,\tilde{y}-j}\right)^2 = \sum_{x,y}\left(S_{x,y}-\sum_j h_j^{(q)}P_{\tilde{x},\,\tilde{y}-j}\right)^2 \qquad (10)$$

with $\tilde{x}=x+[v_x/n]$, $v_x$ mod $n=0$, $\tilde{y}=y+[v_y/n]$, and $v_y$ mod $n=q$. In analogy to Eq. (5), the sum over x and y may be taken over that region of the original image for which the displacement vector is valid. This region may correspond to the macro block, for which the displacement vector has been determined. The region may also consist of a (non-connected) union of some or all macro blocks with displacement vectors that point to the same sub-pel position, i.e., displacement vectors with $v_x$ mod $n=0$ and $v_y$ mod $n=q$.

The overhead for determining and transmitting filter coefficients may be further reduced by exploiting symmetries. In particular, filter coefficients may be symmetrical with respect to horizontal and/or vertical mirroring, viz.

$$g_i^{(p)}=g_{-i}^{(p)} \text{ and/or } h_j^{(p,q)}=h_{-j}^{(p,q)}\,, \qquad (11)$$

at least for those sub-pel positions that are symmetric with respect to the full-pel positions, i.e. $p=2$ and/or $q=2$ in case of quarter-pel resolution ($n=4$). Moreover, one-dimensional filters that correspond to mirror-symmetric sub-pel positions (e.g. $p=1$ and $p=3$ in case of quarter-pel resolution) may be equivalent, viz.

$$g_i^{(p)}=g_{-i}^{(n/2-p)} \text{ and/or } h_j^{(p,q)}=h_{-j}^{(p,n/2-q)}\,, \text{ etc.} \qquad (12)$$

The present invention, however, is not restricted to the above symmetries and other symmetries, including rotational symmetries, may be exploited to reduce the overhead for determining and transmitting filter coefficients

The gain in coding efficiency achieved by employing an adaptive interpolation filter according to the present invention is illustrated in Fig. 10A and B, which show a comparison of the coding efficiency achieved with fixed filter (JM), with a conventional non-separable adaptive two-dimensional filter and with the separable adaptive filter of the present invention. It can be seen that the coding efficiency achieved with the inventive separable adaptive filter is similar to the coding efficiency achieved with the conventional non-separable filter. Both filtering methods offer significant gains compared to the fixed filter of H.264/AVC.

However, the separable filter of the present invention further provides a substantial reduction of the computational complexity of the filtering itself, as it is illustrated in Fig. 11. Applying 6x6-tap two-dimensional non-separable filters requires 360 calculations for each coding block with quarter-pel resolution. With the separable 6-taps filter of the present invention, the number of calculations is reduced to 90.

Summarizing, the present invention relates to a method for determining filter coefficients of a separable two-dimensional adaptive interpolation filter used for motion compensation with sub-pel resolution, a corresponding method for video data compression with adaptive filtering, and a corresponding apparatus. According to the present invention, the two-dimensional interpolation filter is separated into a one-dimensional horizontal interpolation filter and a one-dimensional vertical interpolation filter. Filter coefficients of the first one-dimensional interpolation filter are determined from blocks of video data having motion vectors that indicate a full-pel displacement in the interpolation direction of the second one-dimensional filter. The first one-dimensional filter may then be applied to the video image so as to obtain one-dimensionally interpolated blocks of video data. Filter coefficients of the second one-dimensional interpolation filter are then determined in a second step from interpolated blocks of video data having motion vectors that indicate a sub-

**EP 1 983 759 A1**

pel displacement in the interpolation direction of the second one-dimensional filter. According to this invention, filter coefficients can be determined in a highly efficient manner by solving systems of linear equations.

**Claims**

1. A method for determining filter coefficients of a two-dimensional adaptive interpolation filter for motion compensation of a sequence of video images, said two-dimensional adaptive interpolation filter being separable into a first and a second one-dimensional filter, said first and second one-dimensional filter performing interpolation along a first and a second direction, respectively, said first direction being either one of the horizontal and the vertical direction, said second direction being either one of the horizontal and the vertical direction other than the first direction, said method comprising the steps of
   dividing the video images into a plurality of blocks;
   determining displacement vectors indicating image displacement between a current block and a previous block, said displacement vectors having a fractional-pel resolution;
   determining filter coefficients of the first one-dimensional filter based on blocks having first displacement vectors that indicate a sub-pel displacement in the first direction and a full-pel displacement in the second direction; and
   determining filter coefficients of the second one-dimensional filter based on blocks having second displacement vectors other than the first displacement vectors.

2. A method according to claim 1, wherein the filter coefficients of the second one-dimensional filter are determined based on blocks having displacement vectors that indicate a full-pel displacement in the first direction and a sub-pel displacement in the second direction.

3. A method according to claim 1, further comprising the step of
   applying the first one-dimensional filter so as to obtain one-dimensionally interpolated blocks of video data,
   wherein the filter coefficients of the second one-dimensional filter are determined based on one-dimensionally interpolated blocks having displacement vectors that indicate a sub-pel displacement in the first direction and a sub-pel displacement in the second direction.

4. A method according to any of claims 1 to 3, wherein filter coefficients are determined by computing a measure indicating accuracy of the motion compensation and by varying values of the filter coefficients so as to optimize the computed measure.

5. A method according to any of claims 1 to 3, wherein filter coefficients are determined by solving a system of linear equations so as to determine values of the filter coefficients that optimize accuracy of the motion compensation.

6. A method for video data compression, the method comprising the steps of
   determining a displacement vector indicating image displacement between a current block of video data and a previous block of video data, said displacement vector having a fractional-pel resolution;
   obtaining filter coefficients of a two-dimensional adaptive interpolation filter by performing all steps of a method according to any of claims 1 to 5;
   obtaining pixel values at sub-pel positions indicated by the displacement vector by applying the two-dimensional adaptive interpolation filter to the previous block of video data;
   obtaining a prediction error signal by applying motion compensation to the current block of video data based on the obtained pixel values and the displacement vector; and
   generating compressed video data by encoding the prediction error signal and the filter coefficients.

7. A method according to claim 6, wherein the step of obtaining pixel values further comprises
   a first interpolation step, wherein the first one-dimensional filter is applied to the previous block of video data so as to obtain pixel values that correspond to a one-dimensionally interpolated block of video data; and
   a second interpolation step, wherein the second one-dimensional filter is applied to the one-dimensionally interpolated block of video data.

8. A method according to claim 7, wherein the first interpolation step does not affect a pixel value at a full-pel position.

9. A method according to claim 8, wherein the second interpolation step does not affect a pixel value at a full-pel position nor a pixel value obtained by the first interpolation step.

**10.** A method according to any of claims 6 to 9, wherein pixel values at a certain sub-pel position are determined by applying a two-dimensional adaptive interpolation filter that is specific for the certain sub-pel position.

**11.** A method according to claim 10, wherein a two-dimensional adaptive interpolation filter that is specific for a full-pel position in the first direction is determined by filter coefficients of the second one-dimensional filter only.

**12.** A method according to claim 10 or 11, wherein a two-dimensional adaptive interpolation filter that is specific for a full-pel position in the second direction is determined by filter coefficients of the first one-dimensional filter only.

**13.** A method according to any of claims 10 to 12, wherein a two-dimensional adaptive interpolation filter that is specific for a sub-pel position in the first and the second direction comprises filter coefficients of the first and the second one-dimensional filter.

**14.** A method according to any of claims 10 to 13, wherein at least some of the filter coefficients are obtained by exploiting symmetry properties between two different two-dimensional adaptive interpolation filters that are specific for two different sub-pel positions, respectively.

**15.** A method according to any of claims 6 to 14, wherein at least some of the filter coefficients are obtained by exploiting symmetry properties of the two-dimensional adaptive interpolation filter.

**16.** A method according to claim 15, wherein the two-dimensional adaptive interpolation filter is symmetric with respect to at least either one of horizontal and vertical mirroring.

**17.** A method according to any of claims 6 to 16, wherein the step of obtaining filter coefficients is repeated for either one of every slice of video data, every video image, and every sequence of video images.

**18.** An apparatus for encoding video data, said apparatus being adapted to carry out all steps of a method according to any of claims 1 to 17.

**19.** A computer program product comprising a computer readable medium having computer readable program code embodied thereon, the program code being adapted to carry out all steps of a method according to any of claims 1 to 17.

# Fig. 1

EP 1 983 759 A1

# Fig. 2

Input Signal → **Entropy Decoding** (191) → Quantized Coefficients → **inv. Quant. / inv. Transform** (121) → Prediction Error → (+) (135) → **Deblocking Filter** (137) → Decoded Signal

Prediction Signal

**Intra-Frame Prediction** (150)

**Memory** (140)

Intra / Inter (180)

**Motion Comp. Prediction** (160)

Motion Data

101

EP 1 983 759 A1

# Fig. 3

Input Signal → 110 (⊕)

Prediction Error → 120 Transform / Quantization → Quantized Coefficients

190 Entropy Coding → Encoded Signal

Prediction Signal

130 inv. Quant. / inv. Transform

135 (⊕)

137 Deblocking Filter

150 Intra-Frame Prediction

161 Motion Comp. Prediction with adaptive filtering

91 Memory

180 Intra / Inter

Filter Coefficients

Motion Data

170 Motion Estimation

102

EP 1 983 759 A1

# Fig. 4

EP 1 983 759 A1

# Fig. 5

Fig. 6

# Fig. 7

p=0
p=1
p=2
p=3

n x + p
(sub-pel resolution)

x (full-pel resolution)

q=0
q=1
q=2
q=3

y (full-pel resolution)

n y + q (sub-pel resolution)

$h^{(0,1)}$ $h^{(1,1)}$ $h^{(2,1)}$ $h^{(3,1)}$

$h^{(0,2)}$ $h^{(1,2)}$ $h^{(2,2)}$ $h^{(3,2)}$

$h^{(0,3)}$ $h^{(1,3)}$ $h^{(2,3)}$ $h^{(3,3)}$

EP 1 983 759 A1

# Fig. 8A

BigShips 720p @ 60 Hz
IPPP, High Profile

Legend:
- JM11.0
- JM11.0 + non-separable AIF (KTA)
- JM11.0 + separable AIF

# Fig. 8B

City 720p @ 60Hz
IPPP, High Profile

Legend:
- JM11.0
- JM11.0 + non-separable AIF (KTA)
- JM11.0 + separable AIF

# Fig. 9

**Number of calculations for one block with 1/4-pel resolution**

**European Patent Office**

## EUROPEAN SEARCH REPORT

Application Number

EP 07 00 7994

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIMATA H ET AL: "3D ADAPTIVE MOTION VECTOR CODING INTEGRATED WITH BLOCK-BASED ADAPTIVE INTERPOLATION FILTER" SYSTEMS & COMPUTERS IN JAPAN, WILEY, HOBOKEN, NJ, US, vol. 35, no. 14, December 2004 (2004-12), pages 10-20, XP001211995 ISSN: 0882-1666 | 1-4,6-9, 15-19 | INV. H04N7/26 H04N7/36 |
| A | * abstract * sections 1-4.1 and 4.3-5.1 ----- | 5,10-14 | |
| X | WEDI, THOMAS: "Advanced motion compensated prediction methods" ITU TELECOMMUNICATIONS STANDARDIZATION SECTOR, VCEG-X10, 18 October 2003 (2003-10-18), - 22 October 2003 (2003-10-22) pages 1-8, XP002454495 Palma de Mallorca,Spain | 1,2,4-9, 15-19 | |
| A | * abstract * sections 3 and 5 ----- | 3,10-14 | |
| X | CHONO,KEI-ICHI AND MIYAMOTO, YOSHIHIRO: "Modified Adaptive Interpolation Filter" JOINT VIDEO TEAM (JVT) OF ISO/MPEG & ITU-T VCEG, JVT-D078, 22 July 2002 (2002-07-22), - 26 July 2002 (2002-07-26) pages 1-27, XP030005352 Klagenfurt, Austria | 1,2,4, 6-19 | TECHNICAL FIELDS SEARCHED (IPC) H04N |
| A | * page 1, line 1 - page 3, last line * * page 17; tables C-1 * ----- | 3,5 | |

-/--

The present search report has been drawn up for all claims

| Place of search | Date of completion of the search | Examiner |
|---|---|---|
| Berlin | 15 October 2007 | Heising, Guido |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

# EUROPEAN SEARCH REPORT

Application Number

EP 07 00 7994

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | OLIVER WERNER: "Driftanalyse und Driftreduktion für hierarchische Bewegtbildcodierungen, Abschnitte 4. - 4.3 und 5.4"<br>December 1996 (1996-12), UNIVERSITÄT HANNOVER, FAKULTÄT FÜR MASCHINENWESEN, GERMANY , HANNOVER, GERMANY , XP002454502<br>sections 4.2.1, 4.3 and 5.4, in particular pages 47 and 72-76 and figures 4.11, 4.16, and 5.10<br>----- | 1-19 | |
| A | POLIN LAI ET AL: "Adaptive filtering for video coding with focus change"<br>2007 IEEE INTERNATIONAL CONFERENCE ON ACOUSTICS, SPEECH, AND SIGNAL PROCESSING (IEEE CAT. NO. 07CH37846) IEEE PISCATAWAY, NJ, USA, 15 April 2007 (2007-04-15), pages I-661, XP002454496<br>ISBN: 1-4244-0727-3<br>* abstract *<br>sections 1 - 2.3, in particular page 661, right column, lines 7-19<br>----- | 1-19 | |
| A | WEDI T: "ADAPTIVE INTERPOLATION FILTER FOR MOTION AND ALIASING COMPENSATED PREDICTION"<br>PROCEEDINGS OF THE SPIE, SPIE, BELLINGHAM, VA, US,<br>vol. 4671, 21 January 2002 (2002-01-21), pages 415-422, XP008014091<br>ISSN: 0277-786X<br>* abstract *<br>sections 2.1, 4 and 5<br>-----<br>-/-- | 1-19 | TECHNICAL FIELDS SEARCHED (IPC) |

The present search report has been drawn up for all claims

| Place of search | Date of completion of the search | Examiner |
|---|---|---|
| Berlin | 15 October 2007 | Heising, Guido |

**EP 1 983 759 A1**

**European Patent Office**

# EUROPEAN SEARCH REPORT

Application Number

EP 07 00 7994

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WEDI T ET AL: "Motion- and aliasing-compensated prediction for hybrid video coding" IEEE TRANSACTIONS ON CIRCUITS AND SYSTEMS FOR VIDEO TECHNOLOGY, IEEE SERVICE CENTER, PISCATAWAY, NJ, US, vol. 13, no. 7, July 2003 (2003-07), pages 577-586, XP011099250 ISSN: 1051-8215 * abstract * sections 1-3 ----- | 1-19 | |
| A | WERNER O: "Drift analysis and drift reduction for multiresolution hybrid video coding" SIGNAL PROCESSING. IMAGE COMMUNICATION, ELSEVIER SCIENCE PUBLISHERS, AMSTERDAM, NL, vol. 8, no. 5, July 1996 (1996-07), pages 387-409, XP004047049 ISSN: 0923-5965 * abstract * sections 4 and 6 ----- | 1-19 | |
| A | VATIS Y ET AL: "Motion-And Aliasing-Compensated Prediction Using a Two-Dimensional Non-Separable Adaptive Wiener Interpolation Filter" IMAGE PROCESSING, 2005. ICIP 2005. IEEE INTERNATIONAL CONFERENCE ON GENOVA, ITALY 11-14 SEPT. 2005, PISCATAWAY, NJ, USA,IEEE, 11 September 2005 (2005-09-11), pages 894-897, XP010851198 ISBN: 0-7803-9134-9 * abstract * sections 1. - 3. ----- -/-- | 1-19 | |

TECHNICAL FIELDS SEARCHED (IPC)

The present search report has been drawn up for all claims

| Place of search | Date of completion of the search | Examiner |
|---|---|---|
| Berlin | 15 October 2007 | Heising, Guido |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

23

**European Patent Office**

## EUROPEAN SEARCH REPORT

Application Number

EP 07 00 7994

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | VATIS Y ET AL: "Locally adaptive non-separable interpolation filter for H.264/AVC" 2006 INTERNATIONAL CONFERENCE ON IMAGE PROCESSING IEEE PISCATAWAY, NJ, USA, 1996, page 4 pp., XP002454497 ISBN: 1-4244-0481-9 sections 1-3, in particular section 3 | 1-19 | |
| A | WO 2004/006558 A (NOKIA CORP [FI]; NOKIA INC [US]) 15 January 2004 (2004-01-15) * abstract * * page 18, lines 5-23; figures 1-8 * | 1-19 | |
| A | UGUR K ET AL: "Adaptive interpolation filter with flexible symmetry for coding high resolution high quality video" 2007 IEEE INTERNATIONAL CONFERENCE ON ACOUSTICS, SPEECH, AND SIGNAL PROCESSING (IEEE CAT. NO. 07CH37846) IEEE PISCATAWAY, NJ, USA, 15 April 2007 (2007-04-15), pages I-1013, XP002454498 ISBN: 1-4244-0727-3 * abstract * sections 2 - 3.2 | 1-19 | TECHNICAL FIELDS SEARCHED (IPC) |
| A | RUSANOVSKYY, D. AND UGUR, K.: "Spatio-Temporal Adaptation of Interpolation Filter for Low Complexity Decoding" ITU TELECOMMUNICATIONS STANDARDIZATION SECTOR VCEG-AE22, 15 January 2007 (2007-01-15), - 16 January 2007 (2007-01-16) pages 1-10, XP002454499 Marrakech, MA sections 1 and 2 | 1-19 | |

The present search report has been drawn up for all claims

| Place of search | Date of completion of the search | Examiner |
|---|---|---|
| Berlin | 15 October 2007 | Heising, Guido |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 00 7994

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2007

| Patent document cited in search report | | Publication date | Patent family member(s) | | Publication date |
|---|---|---|---|---|---|
| WO 2004006558 | A | 15-01-2004 | AU 2003246987 A1 | | 23-01-2004 |
| | | | CA 2491679 A1 | | 15-01-2004 |
| | | | CN 1666429 A | | 07-09-2005 |
| | | | EP 1530829 A2 | | 18-05-2005 |
| | | | JP 2005532725 T | | 27-10-2005 |
| | | | MX PA05000335 A | | 31-03-2005 |
| | | | ZA 200410403 A | | 02-09-2005 |

For more details about this annex : see Official Journal of the European Patent Office, No. 12/82